# EUROPÄISCHE PATENTSCHRIFT

(11) **EP 4 649 016 B1**
(45) Veröffentlichungstag und Bekanntmachung des Hinweises auf die Patenterteilung: **09.09.2026**
(21) Anmeldenummer: 24700382.5
(22) Anmeldetag: 04.01.2024
(51) Int. Cl.: B64D 33/10, B64D 27/30, B64D 33/08, B64U 20/96, B64U 50/19, B64U 20/94

(54) **ANTRIEBSVORRICHTUNG FÜR EIN LUFTFAHRZEUG MIT EINER MANTELVORRICHTUNG ZUR LUFTFÜHRUNG**
DRIVE DEVICE FOR AN AIRCRAFT WITH A DUCT DEVICE FOR AIR GUIDING
DISPOSITIF D'ENTRAÎNEMENT POUR AÉRONEF DOTÉ D'UN DISPOSITIF DE CARÉNAGE POUR GUIDAGE D'AIR

(30) Priorität: 10.01.2023 DE 102023100437; 01.06.2023 DE 102023114464
(43) Veröffentlichungstag der Anmeldung: 19.11.2025
(73) Patentinhaber: Rolls-Royce Deutschland Ltd & Co KG, 15827 Blankenfelde-Mahlow (DE)
(72) Erfinder: ZEECK, Uwe Peter, 15827 Blankenfelde-Mahlow (DE); FRÖDE, Andreas, 15827 Blankenfelde-Mahlow (DE)
(86) Internationale Anmeldenummer: PCT/EP2024/050150
(87) Internationale Veröffentlichungsnummer: WO 2024/149667

(56) Entgegenhaltungen:
- DE-C- 682 366
- US-A1- 2019 144 126
- US-A1- 2019 315 476
- US-B2- 10 110 093

## Beschreibung

Die Erfindung betrifft eine Antriebsvorrichtung für ein Luftfahrzeug mit den Merkmalen des Anspruchs 1.

Antriebsvorrichtungen für Luftfahrzeuge haben einen Kühlungsbedarf, der insbesondere durch die Antriebsvorrichtung umströmende Luft gedeckt werden kann. Dabei weisen elektrische Antriebe, speziell für Senkrecht-Start- und - Landungsluftfahrzeuge (eVTOL) nur wenig Bauraum auf, so dass wenig Platz für effiziente Kühlungsvorrichtungen bleibt.

Herkömmliche Propellerantriebe verwenden insbesondere separate Kühler in Hutzen. Bei Sternmotoren kamen Lufteinlässe im Bereich der Drehachse zum Einsatz.

Es besteht die Aufgabe, Antriebsvorrichtungen zu schaffen, die eine effiziente Luftführung erlauben. Allgemein technischer Hintergrund ist dazu aus der US 2019 / 144126 A1, der US 10 110 093 B2, der US 2019 / 315476 A1 und der DE 682 366 C bekannt. US2019/144126A1 offenbart eine gestapelte Triebwerksanordnung für ein Luftfahrzeug, die ein vorderes Triebwerk mit einer Auslassöffnung und ein hinteres Triebwerk, das hinter dem vorderen Triebwerk angeordnet ist, umfasst, wobei das hintere Triebwerk eine Ansaugöffnung aufweist. Die gestapelte Triebwerksanordnung umfasst eine Abluftleitung, die von der Auslassöffnung des vorderen Triebwerks ausgeht und zumindest teilweise um das hintere Triebwerk herum angeordnet ist, so dass die Abluft des vorderen Triebwerks das hintere Triebwerk umgeht. Die gestapelte Triebwerksanordnung umfasst ferner eine Ansaugleitung, die an der Ansaugöffnung des hinteren Triebwerks endet und zumindest teilweise um das vordere Triebwerk herum angeordnet ist, so dass die Ansaugluft für das hintere Triebwerk das vordere Triebwerk umgeht.

Die Aufgabe wird durch eine Antriebsvorrichtung mit den Merkmalen des Anspruchs 1 gelöst.

Die Antriebsvorrichtung weist dabei eine Mantelvorrichtung auf, die die Antriebsvorrichtung wenigstens teilweise in Umfangsrichtung umgibt, wobei die Mantelvorrichtung in Umfangsrichtung eine periodisch umlaufende Profilierung aufweist, wobei der offene Querschnitt der Profilierung mindestens teilweise senkrecht zur Flugrichtung des Luftfahrzeugs orientiert ist. Der offene Querschnitt ist der profilierte, z.B. verformte Bereich an der Mantelvorrichtung, der in Richtung der Flugrichtung zeigt.

Dabei dient eine in Umfangsrichtung der Mantelvorrichtung umlaufende Strömungsleitvorrichtung dazu, den Querschnitt der Profilierung radial in zwei Teile zu teilen, d.h. einen äußeren Teil und einen inneren Teil.

Dabei weist die Profilierung zwei Bereiche auf, nämlich einen ersten Profilierungsbereich mit mindestens einer ersten Öffnung eines ersten Luftführungskanals und einen zweiten Profilierungsbereich mit mindestens einer zweiten Öffnung eines zweiten Luftführungskanals. Die Profilierungsbereiche sind so mit Luftführungskanälen gekoppelt, durch deren Öffnung Luft einströmen kann. Mit dem mindestens einen ersten Luftführungskanal ist Luft in das Innere der Antriebsvorrichtung führbar und mit dem mindestens einen zweiten Luftführungskanal ist Luft aus dem Inneren der Antriebsvorrichtung führbar.

Somit ermöglicht die periodisch umlaufende Profilierung der Mantelvorrichtung, dass z.B. Kühlluft sowohl in das Innere der Antriebsvorrichtung geführt werden kann und mit gleicher Profilierung die erhitzte Luft wieder abgeführt werden kann.

Dabei kann in einer Ausführungsform die periodische Profilierung im Querschnitt senkrecht zur Flugrichtung wenigstens abschnittsweise wellenförmig, insbesondere sinusförmig, dreieckig und / oder rechteckig ausgebildet sein. Alle diese Querschnittsformen erlauben bei der Anordnung an der Mantelvorrichtung, dass die Strömungsleitvorrichtung diese radial in zwei Profilierungsbereiche teilt, so dass die Zufuhr und Abfuhr von Luft in einfacher Weise bewerkstelligt werden kann.

So kann die Strömungsleitvorrichtung insbesondere ringförmig ausgebildet sein, wobei diese mindestens teilweise parallel zur Flugrichtung orientiert ist. Eine Schmalseite des Rings kann dann z.B. in Richtung der Flugrichtung zeigen, so dass die Luft an der Außen- und Innenseite der ringförmigen Strömungsleitvorrichtung in die Öffnungen der Luftführungskanäle strömen kann.

In einer Ausführungsform kann die Profilierung zwei periodisch umlaufende Querschnitte aufweisen, die gegeneinander versetzt angeordnet sind. So kann z.B. die Vorder- und die Rückseite der Profilierung jeweils eine sinusförmige Kontur aufweisen, wobei aber die sinusförmigen Konturen gegeneinander (z.B. um 180°) verschoben angeordnet sind.

Auch kann in einer Ausführungsform die Strömungsleitvorrichtung im Bereich der ersten Öffnung in eine Richtung, insbesondere in radialer Richtung, verformt sein, so dass die effektive Querschnittsfläche für eintretende Luft vergrößert ist. So kann z.B. die Strömungsleitvorrichtung vor den ersten Öffnungen radial nach innen verformt sein, um einen größeren Querschnitt für die Luft zu schaffen.

In einer weiteren Ausführungsform kann die Strömungsleitvorrichtung im Bereich der zweiten Öffnung ein Kanalisierungsmittel aufweisen, so dass durch die zweite Öffnung Luft gezielt aus dem Inneren der Antriebsvorrichtung führbar ist. Das Kanalisierungsmittel kann z.B. dazu dienen, die Luft aus dem Inneren der Antriebsvorrichtung gezielt zu den zweiten Öffnungen zu leiten.

Zur Sicherung der internen Kühlung der Antriebsvorrichtung kann die durch den mindestens einen ersten Luftführungskanal einströmende Luft in eine Luftsammelkammer der Antriebsvorrichtung geführt werden. Die Luftsammelkammer kann dabei ein einzelner Hohlraum sein oder der Hohlraum, der interne Aggregate der Antriebsvorrichtung umfasst. Dabei kann z.B. die in die Luftsammelkammer eingeströmte Luft über eine Öffnung der Luftsammelkammer zur zweiten Öffnung des mindestens einen zweiten Luftführungskanals geführt werden. Auch kann zusätzlich oder alternativ aus der Luftsammelkammer strömende Luft als Kühlluft für einen Teil der Antriebsvorrichtung verwendbar sein.

Für eine einfache Herstellbarkeit kann ein Teil der Mantelvorrichtung aus einem rechteckigen Flachmaterial gebildet sein, wobei die Profilierung in einem Randbereich des Flachmaterials angeordnet ist, der in die Flugrichtung orientiert ist.

Die Antriebsvorrichtung kann einen Propellerantrieb, insbesondere einen elektrisch angetriebenen Propellerantrieb mit rückwärtigem Kühlungseinlauf aufweisen. Diese Antriebsvorrichtung kann insbesondere bei Luftfahrzeugen der *urban air mobility* (UAM) eingesetzt werden. Dafür kann die Antriebsvorrichtung insbesondere mit einem, insbesondere elektrisch angetriebenen, Senkrecht-Start- und -Landungsluftfahrzeug koppelbar sein.

Im Zusammenhang mit den in den Figuren dargestellten Ausführungsbeispielen wird die Erfindung erläutert. Dabei zeigt
Figur 1 eine schematische perspektivische Ansicht einer ersten Ausführungsform einer Antriebsvorrichtung;
Figur 2 eine schematische Schnittansicht der Ausführungsform aus Figur 1;
Figur 3 eine schematische Teilansicht einer zweiten Ausführungsform einer Antriebsvorrichtung;
Figur 4 eine schematische Teilansicht einer dritten Ausführungsform einer Antriebsvorrichtung;
Figur 5 eine schematische Teilansicht einer vierten Ausführungsform einer Antriebsvorrichtung;
Figur 6 eine schematische Teilansicht einer fünften Ausführungsform einer Antriebsvorrichtung;
Figur 7 eine schematische Teilansicht einer sechsten Ausführungsform einer Antriebsvorrichtung.

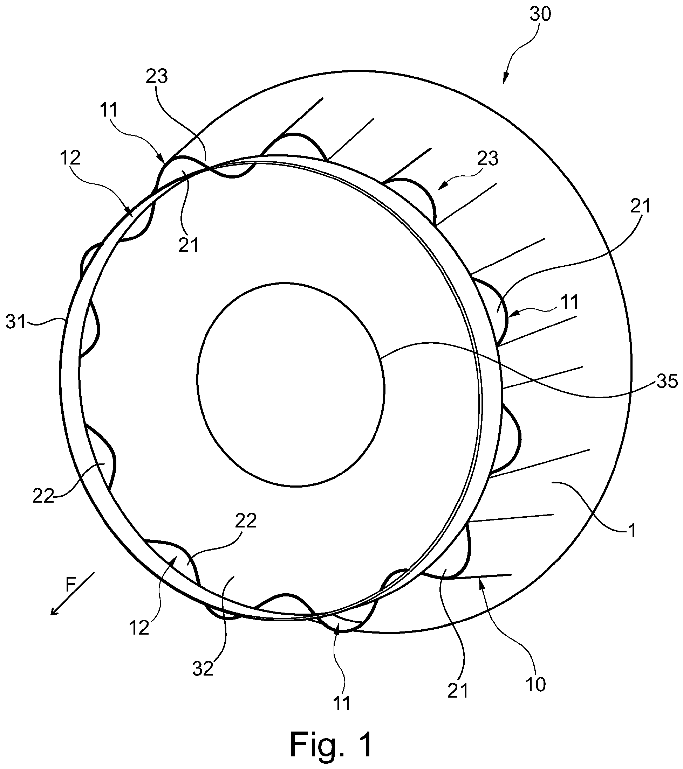

In der Figur 1 ist eine Vorderansicht einer an sich bekannten Antriebsvorrichtung 30 - hier einer elektrischen Antriebsvorrichtung 30 - schematisch dargestellt. Aus Gründen der Übersichtlichkeit ist der Propeller hier nicht dargestellt. Auch ist nur der Teil der Antriebsvorrichtung 30 gestellt, der unmittelbar hinter der Drehebene des Propellers liegt.

Im Betrieb der Antriebsvorrichtung 30 zeigt die Flugrichtung F in Richtung der Drehachse des Propellers.

Im Folgenden geht es vor allem um die Führung von Luft, die im Betrieb von vorne (also entgegen der Flugrichtung F) auf die Antriebsvorrichtung 30 einströmt.

Zur Luftführung weist die Antriebsvorrichtung 30 eine Mantelvorrichtung 1 auf, die die Antriebsvorrichtung 30 in Umfangsrichtung vollständig umgibt. In anderen, hier nicht dargestellten Ausführungsformen erstreckt sich die Mantelvorrichtung 1 nur über einen Teil des Umfangs der Antriebsvorrichtung 30.

Die Mantelvorrichtung 1 weist in Umfangsrichtung eine periodisch umlaufende Profilierung 10 auf, wobei der offene Querschnitt der Profilierung 10 mindestens teilweise senkrecht zur Flugrichtung F des Luftfahrzeugs orientiert ist.

Die Profilierung 10 ist hier an der Vorderkante der Mantelvorrichtung 1 angeordnet. In diese Vorderkante ist eine sinusförmige Wellenprofilierung eingeprägt, die effizient herstellbar ist. Dazu muss z.B. ein rechteckiges Blech an einer Längskante z.B. mit Pressen mit einer solchen Wellenprofilierung versehen werden.

Anschließend kann das Blech zu einem Ring zusammengefügt werden, so dass die Mantelvorrichtung 1 (oder zumindest ein Teil davon) mit der Profilierung 10 entsteht.

Somit ragen die Berge der periodischen Profilierung 10 radial nach außen, während die Täler der Profilierung 10 radial nach innen zeigen.

Unter dem Querschnitt der Profilierung 10 wird hier der verformte Teil der Mantelvorrichtung 1 verstanden, der in Flugrichtung F orientiert ist. Da die Profilierung 10 sinusförmig ist, ist der Querschnitt der Profilierung ein ringförmiger Bereich mit einer radialen Erstreckung mit einer Breite der doppelten Amplitude.

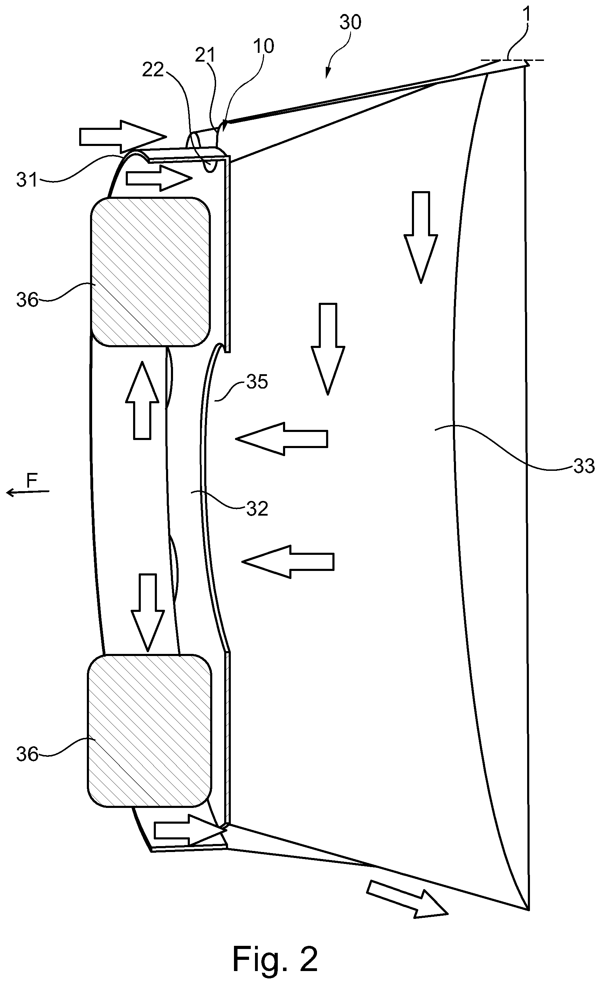

Vor dieser Profilierung 10 ist eine in Umfangsrichtung umlaufende Strömungsleitvorrichtung 31 angeordnet, die den Querschnitt der Profilierung 10 in zwei Teile teilt, einen radial inneren Teil und einen radial äußeren Teil. Die Strömungsleitvorrichtung 31 ist hier als ein im Wesentlichen horizontal, parallel zur Flugrichtung F liegendes Leitelement (siehe Figur 2) ausgebildet, d.h. als Ring, dessen eine flache Seite entgegen der Flugrichtung F orientiert ist.

Die Berge der wellenförmigen Profilierung 10 liegen im radial äußeren Teil, die Täler der Profilierung 10 im radial inneren Teil.

Im radial äußeren Teil liegt somit ein erster Profilierungsbereich 11, der über eine Vielzahl von ersten Öffnungen 21 von ersten Luftführungskanälen 23 verfügt. Die ersten Luftführungskanäle 23 sind unter den hier sichtbaren radialen Auswölbungen angeordnet und sind in den Figuren 2 bis 7 besser sichtbar.

Die ersten Öffnungen 21 bilden Einlassöffnungen für die Luft, die im Betrieb von vorne auf die Antriebsvorrichtung 30 strömt.

Im radial inneren Teil liegt ein zweiter Profilierungsbereich 12, der über eine Vielzahl von zweiten Öffnungen 22 von Luftführungskanälen 24 verfügt. Die zweiten Luftführungskanäle 24 sind hier die Täler zwischen den Auswölbungen der ersten Luftführungskanäle 24. Auch diese sind in den Fig. 2 bis 7 besser sichtbar.

Mit einer solchen Anordnung kann über die Vielzahl der ersten Luftführungskanäle 23 Luft in das Innere der Antriebsvorrichtung 30 geführt werden (siehe Figur 2). Gleichzeitig kann mit der Vielzahl der zweiten Luftführungskanäle 24 Luft aus dem Inneren der Antriebsvorrichtung 30 geführt werden.

Damit bietet die Profilierung 10 im Zusammenhang mit der Strömungsleitvorrichtung 31 insbesondere zu Kühlungszwecken eine effiziente Möglichkeit, Luft in die und aus der Antriebsvorrichtung 30 zu führen.

Eine Anwendung der Ausführungsform gemäß der Figur 1 ist in der Figur 2 dargestellt.

Die Vielzahl der Öffnungen 21, 22 der Luftführungskanäle 23, 24 ist in dieser Schnittansicht an der Vorderseite der Mantelvorrichtung 1 dargestellt.

Von der Vorderseite der Antriebsvorrichtung 30 strömt kühle Luft (helle Pfeile) in die ersten Öffnungen 21 des ersten Profilierungsbereiches 12 ein. Diese Öffnungen liegen radial außerhalb der Strömungsleitvorrichtung 31, wobei die Luft durch die ersten Luftführungskanäle 23 in eine Luftsammelkammer 33 im Inneren der Antriebsvorrichtung 30 geführt wird.

Nach vorne wird die Luftsammelkammer 33 durch eine ringförmige Wandung 32 begrenzt, die radial außen mit der Strömungsleitvorrichtung 31 verbunden ist. Nach hinten wird die Luftsammelkammer 33 durch eine weitere Wandung oder Aggregate im Inneren der Antriebsvorrichtung 30 begrenzt.

Im Zentralbereich der Wandung 32 ist eine Öffnung 35 angeordnet, aus der kühle Luft aus der Luftsammelkammer 33 nach vorne in Richtung des hier nicht dargestellten Propellers strömen kann.

Die zentral ausströmende Luft strömt dann anschließend radial nach außen und heizt sich an den Antriebsaggregaten 36 auf. Die heiße Luft (helle Pfeile) strömt dann auf der radialen Innenseite der Strömungsleitvorrichtung 31 entgegen der Flugrichtung F nach hinten, und zwar durch die zweiten Öffnungen 22 des zweiten Profilierungsbereiches 12. Die zweiten Luftführungskanäle 24 führen die heiße Luft dann nach außen, d.h. auf die Außenseite der Antriebsvorrichtung 30.

So kann mit der periodischen Profilierung 10 an der Mantelvorrichtung 1 gleichzeitig kühle Luft in die Antriebsvorrichtung 30 geführt werden und aufgeheizte Luft aus der Antriebsvorrichtung 30 abgeführt werden.

In der Ausführungsform gemäß den Figuren 1 und 2 weist die Profilierung 10 eine Kontur mit einer Sinusform auf. Diese läuft nach hinten in die Mantelvorrichtung 1 aus, die einen im Wesentlichen kreisförmigen Querschnitt aufweist.

In alternativen - hier nicht dargestellten - Ausführungsformen kann die periodisch umlaufende Profilierung 10 auch eine andere Form haben. Denkbar sind z.B. rechteckige Konturen oder dreieckige Konturen. Grundsätzlich ist es auch möglich unterschiedliche Konturen entlang des Umfangs der Antriebsvorrichtung 30 zu verwenden. Auch diese Profilierungen 10 können durch die Strömungsleitvorrichtung 31 in radial zwei Teile aufgeteilt werden, so dass sich innenliegende und außenliegende Öffnungen 21, 22 ergeben.

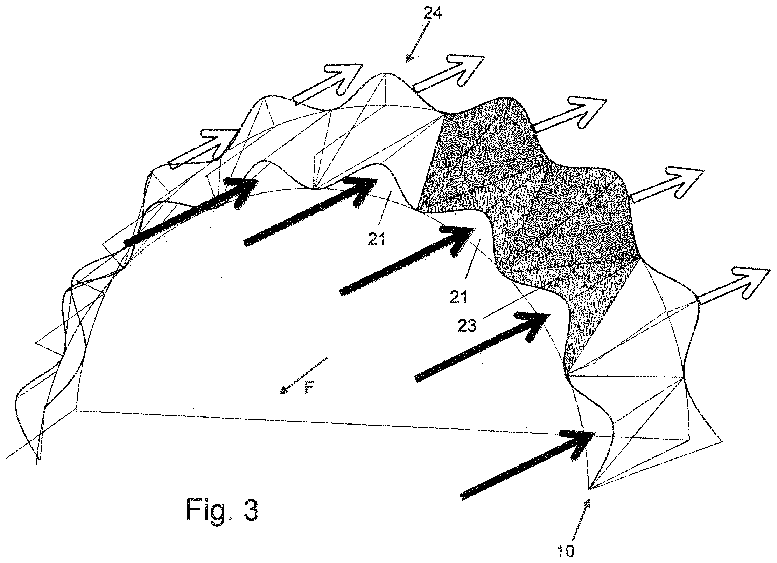

In den Figuren 3 bis 7 wird jeweils ein Teilabschnitt der Profilierung 10 bei unterschiedlichen Ausführungsformen dargestellt, so dass insbesondere andere Teile der Antriebsvorrichtung 30 nicht dargestellt sind. Ansonsten ist die Beschreibung der ersten Ausführungsform (Figuren 1 und 2) analog anwendbar.

Figur 3 zeigt eine zweite Ausführungsform einer Antriebsvorrichtung 30 mit einer Profilierung 10, deren Vorderkante wie bei der ersten Ausführungsform eine sinusförmige Kontur aufweist. Aber anders als bei der ersten Ausführungsform geht die Profilierung 10 im hinteren Teil nicht glatt in die Mantelvorrichtung 1 über, sondern weist ebenfalls eine sinusförmige Kontur aus, wobei die Berge der hinteren Kontur im Bereich der Täler der vorderen Kontur angeordnet sind, so dass sich eine alternierende Wellenstruktur ergibt. Damit liegen zwei periodisch umlaufende Querschnitte vor, die gegeneinander versetzt sind.

Die eintretende kühle Luft (dunkle Pfeile) tritt in die Öffnungen 21 der ersten Luftführungskanäle 23 ein. In der Figur 3 ist somit der erste Profilierungsbereich dargestellt.

Die austretende Luft (helle Pfeile) tritt aus dem zweiten Luftführungskanal 24 aus, wobei die Luftführung im Inneren der Antriebsvorrichtung 30 der ersten Ausführungsform entsprechen kann.

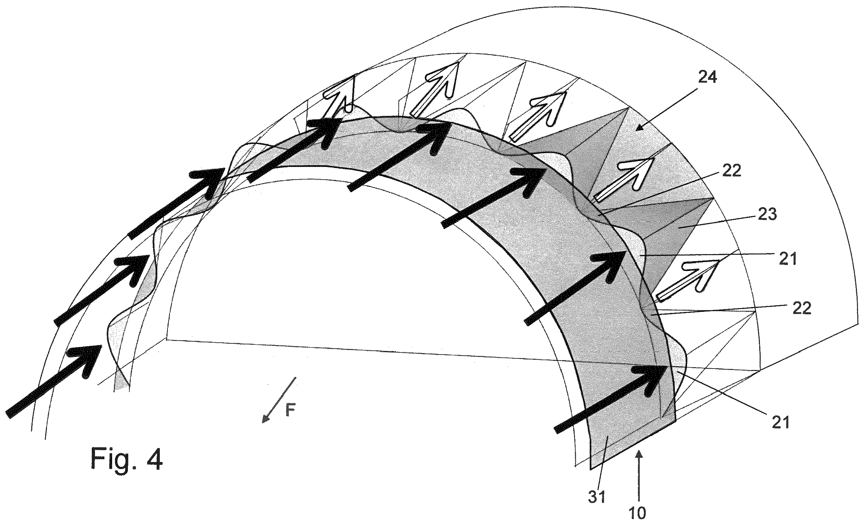

Figur 4 zeigt eine dritte Ausführungsform einer Antriebsvorrichtung 30, wobei hier vor der Profilierung 10 die Strömungsleitvorrichtung 31 dargestellt ist. Die zweiten Luftführungskanäle 24 gehen hier am hinteren Teil der Profilierung 10 in einen ringförmigen Bereich der Mantelvorrichtung 1 über.

Ein Teil der Wellenberge, die die ersten Öffnungen 21 bilden, sind radial innerhalb der Strömungsleitvorrichtung 31 blockiert, so dass nur Luft radial außerhalb der Strömungsleitvorrichtung 31 in die ersten Öffnungen 21 eintreten kann.

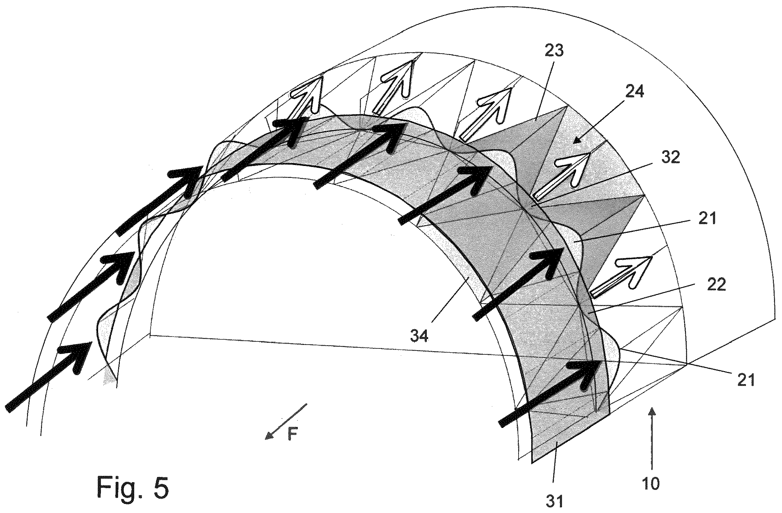

Die vierte Ausführungsform, die in Figur 5 dargestellt ist, ist eine Abwandlung der dritten Ausführungsform, wobei die unteren Einlassbereiche aber nicht blockiert sind. Vielmehr weist die Strömungsleitvorrichtung 31 ein Kanalisierungsmittel 34 in Form von Wänden auf, die in Richtung der zweiten Öffnungen 22 konvergieren. Damit kann die erhitzte Luft (helle Pfeile) bei geringem Druckverlust in den zweiten Luftführungskanal 24 geführt werden.

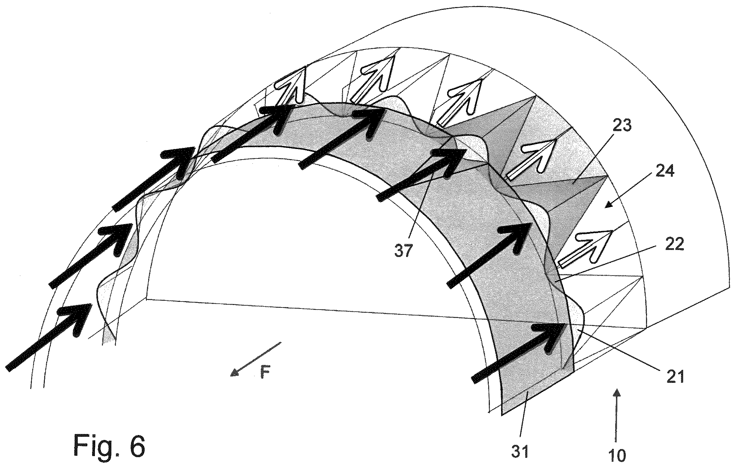

Die fünfte Ausführungsform, die in Figur 6 dargestellt ist, weist eine Verformung 37 in der Strömungsleitvorrichtung 31 auf, die vor den ersten Öffnungen 21 angeordnet ist. Die Verformung 37 zeigt hier radial nach innen, so dass der effektive Querschnitt für die einströmende Luft vergrößert wird. Aus Gründen der Übersichtlichkeit ist diese Verformung hier nur vor einer ersten Öffnung 21 dargestellt.

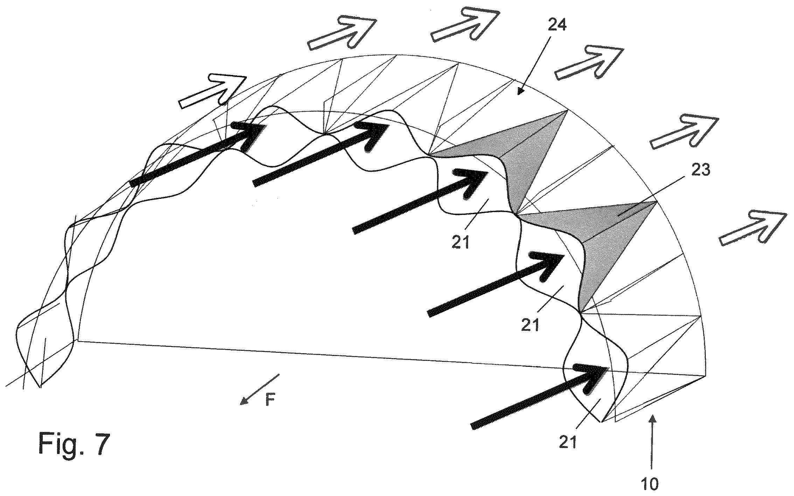

Die sechste Ausführungsform, die in Figur 7 dargestellt ist, weist eine Strömungsleitvorrichtung 31 auf, die zweiteilig ausgeführt ist.

### Bezugszeichenliste

- 1: Mantelvorrichtung

- 10: Profilierung

- 11: erster Profilierungsbereich
- 12: zweiter Profilierungsbereich

- 21: erste Öffnung im ersten Profilierungsbereich
- 22: zweite Öffnung im zweiten Profilierungsbereich
- 23: erster Luftführungskanal
- 24: zweiter Luftführungskanal

- 30: Antriebsvorrichtung
- 31: Strömungsleitvorrichtung
- 32: Wandung
- 33: Luftsammelkammer
- 34: Kanalisierungsmittel
- 35: Öffnung
- 36: Antriebsaggregate
- 37: Verformung in Strömungsleitvorrichtung

- F: Flugrichtung

## Patentansprüche

1. Antriebsvorrichtung (30) für ein Luftfahrzeug mit einer Mantelvorrichtung (1) zur Luftführung, wobei
die Mantelvorrichtung (1) die Antriebsvorrichtung (30) wenigstens teilweise in Umfangsrichtung umgibt, wobei die Mantelvorrichtung (1) in Umfangsrichtung eine periodisch umlaufende Profilierung (10) aufweist, wobei der offene Querschnitt der Profilierung (10) mindestens teilweise senkrecht zur Flugrichtung (F) des Luftfahrzeugs orientiert ist und
eine in Umfangsrichtung umlaufende Strömungsleitvorrichtung (31), die den offenen Querschnitt der Profilierung (10) radial in zwei Teile teilt, wobei
ein erster Profilierungsbereich (11) der Profilierung (10) mindestens eine erste Öffnung (21) eines ersten Luftführungskanals (23) aufweist, wobei die mindestens eine erste Öffnung (21) radial außerhalb der Strömungsleitvorrichtung (31) liegt, und
ein zweiter Profilierungsbereich (12) der Profilierung (10) mindestens eine zweite Öffnung (22) eines zweiten Luftführungskanals (24) aufweist, wobei die mindestens eine erste Öffnung auf der radialen Innenseite der Strömungsleitvorrichtung (31) liegt und
mit dem mindestens einen ersten Luftführungskanal (23) Luft in das Innere der Antriebsvorrichtung (30) führbar ist und mit dem mindestens einen zweiten Luftführungskanal (24) Luft aus dem Inneren der Antriebsvorrichtung (30) führbar ist.

2. Antriebsvorrichtung (30) nach Anspruch 1, **dadurch gekennzeichnet, dass** die periodische Profilierung (10) im Querschnitt senkrecht zur Flugrichtung (F) wenigstens abschnittsweise wellenförmig, insbesondere sinusförmig, dreieckig und / oder rechteckig ausgebildet ist.

3. Antriebsvorrichtung (30) nach Anspruch 1 oder 2, **dadurch gekennzeichnet, dass** die Strömungsleitvorrichtung (31) ringförmig ausgebildet ist, wobei diese mindestens teilweise parallel zur Flugrichtung (F) orientiert ist.

4. Antriebsvorrichtung (30) nach mindesten einem der vorhergehenden Ansprüche, **dadurch gekennzeichnet, dass** die Profilierung (10) zwei periodisch umlaufende Querschnitte aufweist, die gegeneinander versetzt angeordnet sind.

5. Antriebsvorrichtung (30) nach mindestens einem der vorhergehenden Ansprüche, **dadurch gekennzeichnet, dass** die Strömungsleitvorrichtung (31) im Bereich der ersten Öffnung (21) in eine Richtung, insbesondere in radialer Richtung, verformt ist, so dass die effektive Querschnittsfläche für eintretende Luft vergrößert ist.

6. Antriebsvorrichtung (30) nach mindestens einem der vorhergehenden Ansprüche, **dadurch gekennzeichnet, dass** die Strömungsleitvorrichtung (31) im Bereich der zweiten Öffnung (22) ein Kanalisierungsmittel (34) aufweist, so dass durch die zweite Öffnung (23) Luft gezielt aus dem Inneren der Antriebsvorrichtung (30) führbar ist.

7. Antriebsvorrichtung (30) nach mindestens einem der vorhergehenden Ansprüche, **dadurch gekennzeichnet, dass** durch den mindestens einen ersten Luftführungskanal (23) einströmende Luft in eine Luftsammelkammer (33) der Antriebsvorrichtung (30) führbar ist.

8. Antriebsvorrichtung (30) nach Anspruch 7, **dadurch gekennzeichnet, dass** in die Luftsammelkammer (33) eingeströmte Luft über eine Öffnung (35) der Luftsammelkammer (33) zur zweiten Öffnung (22) des mindestens einen zweiten Luftführungskanals (24) führbar ist.

9. Antriebsvorrichtung (30) nach Anspruch 7 oder 8, **dadurch gekennzeichnet, dass** aus der Luftsammelkammer (33) strömende Luft als Kühlluft (K) für einen Teil der Antriebsvorrichtung (30) verwendbar ist.

10. Antriebsvorrichtung (30) nach mindestens einem der vorhergehenden Ansprüche, **dadurch gekennzeichnet, dass** die Mantelvorrichtung (1) aus einem rechteckigen Flachmaterial gebildet ist, wobei die Profilierung in einem Randbereich angeordnet ist, der in die Flugrichtung (F) orientiert ist.

11. Antriebvorrichtung (30) nach mindestens einem der vorhergehenden Ansprüche, **dadurch gekennzeichnet, dass** diese einen Propellerantrieb, insbesondere einen elektrisch angetriebenen Propellerantrieb, mit rückwärtigem Kühlungseinlauf aufweist.

12. Antriebsvorrichtung (30) nach mindestens einem der vorhergehenden Ansprüche, **dadurch gekennzeichnet, dass** sie mit einem, insbesondere elektrisch angetriebenen, Senkrecht-Start- und -Landungsluftfahrzeug koppelbar ist

## Claims

1. Drive device (30) for an aircraft with a casing (1) for guiding air, wherein
the casing (1) at least partially surrounds the drive device (30) in the circumferential direction, wherein the casing (1) has a periodically circumferential profiling (10) in the circumferential direction, wherein the open cross-section of the profiling (10) is oriented at least partially perpendicular to the direction of flight (F) of the aircraft, and
a circumferential flow guiding device (31) that radially divides the open cross-section of the profiling (10) into two parts, wherein
a first profiling region (11) of the profiling (10) has at least one first opening (21) of a first air guiding channel (23), wherein the at least one first opening (21) lies radially outside the flow guiding device (31), and
a second profiling region (12) of the profiling (10) has at least one second opening (22) of a second air guiding channel (24), wherein the at least one first opening lies on the radial inner side of the flow guiding device (31), and
air can be guided into the interior of the drive device (30) by the at least one first air guiding channel (23) and air can be guided out of the interior of the drive device (30) by the at least one second air guiding channel (24).

2. Drive device (30) according to claim 1, **characterised in that** the periodic profiling (10) is at least partially wave-shaped, in particular sinusoidal, triangular and/or rectangular in cross-section perpendicular to the direction of flight (F).

3. Drive device (30) according to claim 1 or 2, **characterised in that** the flow guiding device (31) has an annular design, wherein the flow guiding device is oriented at least partially parallel to the direction of flight (F).

4. Drive device (30) according to at least one of the preceding claims, **characterised in that** the profiling (10) has two periodically circumferential cross-sections that are arranged offset from one another.

5. Drive device (30) according to at least one of the preceding claims, **characterised in that** the flow guiding device (31) is deformed in the region of the first opening (21) in one direction, in particular in the radial direction, so that the effective cross-sectional area for incoming air is increased.

6. Drive device (30) according to at least one of the preceding claims, **characterised in that** the flow guiding device (31) has a channelling means (34) in the region of the second opening (22), so that air can be guided in a targeted manner out of the interior of the drive device (30) through the second opening (23).

7. Drive device (30) according to at least one of the preceding claims, **characterised in that** air flowing in through the at least one first air guiding channel (23) can be guided into an air collection chamber (33) of the drive device (30).

8. Drive device (30) according to claim 7, **characterised in that** air flowing into the air collection chamber (33) can be guided to the second opening (22) of the at least one second air guiding channel (24) via an opening (35) of the air collection chamber (33).

9. Drive device (30) according to claim 7 or 8, **characterised in that** air flowing out of the air collection chamber (33) can be used as cooling air (K) for a part of the drive device (30).

10. Drive device (30) according to at least one of the preceding claims, **characterised in that** the casing (1) is formed from a rectangular flat material, wherein the profiling is arranged in an edge region which is oriented in the direction of flight (F).

11. Drive device (30) according to at least one of the preceding claims, **characterised in that it** has a propeller drive, in particular an electrically driven propeller drive, with a rear cooling inlet.

12. Drive device (30) according to at least one of the preceding claims, **characterised in that** it can be coupled to a vertical take-off and landing aircraft, in particular an electrically driven vertical take-off and landing aircraft.

## Revendications

1. Dispositif d'entraînement (30) pour aéronef doté d'un dispositif de carter (1) pour guidage d'air, dans lequel
le dispositif de carter (1) entoure au moins partiellement le dispositif d'entraînement (30) dans la direction circonférentielle, le dispositif de carter (1) présentant dans la direction circonférentielle un profilage (10) périphérique périodique, la section transversale ouverte du profilage (10) étant orientée au moins partiellement perpendiculairement à la direction de vol (F) de l'aéronef et
un dispositif de guidage de l'écoulement (31) périphérique dans la direction circonférentielle qui divise radialement en deux parties la section transversale ouverte du profilage (10), dans lequel
une première zone de profilage (11) du profilage (10) présente au moins une première ouverture (21) d'un premier canal de guidage d'air (23), l'au moins une première ouverture (21) étant située radialement à l'extérieur du dispositif de guidage de l'écoulement (31), et
une seconde zone de profilage (12) du profilage (10) présente au moins une seconde ouverture (22) d'un second canal de guidage d'air (24), l'au moins une première ouverture étant située sur la face interne radiale du dispositif de guidage de l'écoulement (31) et
de l'air peut être guidé vers l'intérieur du dispositif d'entraînement (30) par l'au moins un premier canal de guidage d'air (23) et de l'air peut être guidé hors de l'intérieur du dispositif d'entraînement (30) par l'au moins un second canal de guidage d'air (24).

2. Dispositif d'entraînement (30) selon la revendication 1, **caractérisé en ce que** le profilage périodique (10) est réalisé, dans une section transversale perpendiculaire à la direction de vol (F), au moins sur une portion de manière ondulée, en particulier sinusoïdale, triangulaire et / ou rectangulaire.

3. Dispositif d'entraînement (30) selon l'une des revendications 1 ou 2, **caractérisé en ce que** le dispositif de guidage de l'écoulement (31) est réalisé sous forme annulaire, celui-ci étant orienté au moins partiellement parallèlement à la direction de vol (F).

4. Dispositif d'entraînement (30) selon au moins l'une des revendications précédentes, **caractérisé en ce que** le profilage (10) présente deux sections transversales périphériques périodiques, qui sont disposées en décalage l'une par rapport à l'autre.

5. Dispositif d'entraînement (30) selon au moins l'une des revendications précédentes, **caractérisé en ce que** le dispositif de guidage de l'écoulement (31) est déformé dans la zone de la première ouverture (21) dans une direction, en particulier dans la direction radiale, de sorte que la surface de section transversale effective pour l'air entrant est agrandie.

6. Dispositif d'entraînement (30) selon au moins l'une des revendications précédentes, **caractérisé en ce que** le dispositif de guidage de l'écoulement (31) présente un moyen de canalisation (34) dans la zone de la seconde ouverture (22), de sorte que de l'air peut être guidé de manière ciblée hors de l'intérieur du dispositif d'entraînement (30) par la seconde ouverture (23).

7. Dispositif d'entraînement (30) selon au moins l'une des revendications précédentes, **caractérisé en ce que** l'air entrant par l'au moins un premier canal de guidage d'air (23) peut être guidé dans une chambre de collecte d'air (33) du dispositif d'entraînement (30).

8. Dispositif d'entraînement (30) selon la revendication 7, **caractérisé en ce que** l'air ayant pénétré dans la chambre de collecte d'air (33) peut être guidé par une ouverture (35) de la chambre de collecte d'air (33) vers la seconde ouverture (22) de l'au moins un second canal de guidage d'air (24).

9. Dispositif d'entraînement (30) selon l'une des revendications 7 ou 8, **caractérisé en ce que** l'air s'écoulant hors de la chambre de collecte d'air (33) peut être utilisé comme air de refroidissement (K) pour une partie du dispositif d'entraînement (30).

10. Dispositif d'entraînement (30) selon au moins l'une des revendications précédentes, **caractérisé en ce que** le dispositif de carter (1) est formé à partir d'un matériau plat rectangulaire, dans lequel le profilage est disposé dans une zone de bord qui est orientée dans la direction de vol (F).

11. Dispositif d'entraînement (30) selon au moins l'une des revendications précédentes, **caractérisé en ce que** celui-ci présente un entraînement par hélice, en particulier un entraînement par hélice électrique, avec une entrée de refroidissement arrière.

12. Dispositif d'entraînement (30) selon au moins l'une des revendications précédentes, **caractérisé en ce qu'**il peut être couplé à un aéronef à décollage et atterrissage verticaux, en particulier à entraînement électrique.
